# EUROPEAN PATENT APPLICATION

(11) **EP 1 347 229 A2**
(43) Date of publication of application: **24.09.2003**
(21) Application number: 03075832.0
(22) Date of filing: 21.03.2003
(51) Int. Cl.: F16L 59/14

(54) **An insulated pipe for the distribution of fluids**

(30) Priority: 22.03.2002 DK 200200448
(71) Applicant: ALSTOM Power FlowSystems A/S, 7000 Fredericia (DK)
(72) Inventor: Schacht, Peter Bergsrom, 7050 Borkop (DK)
(74) Representative: Brock-Nannestad, George

(57) **Abstract**

Known insulated pipes for the transmission of fluids that may assume a range of temperatures and pressures are prepared with compensators and/or restraining for absorbing the axial forces and length deviations caused by the temperature variations in particular. When they are installed in the ground an advanced combination of materials surrounding the pipes is required, in order that an installation becomes stable in use and is not subject to breakdown due to unfortunate combinations of pressure and temperature. According to the invention all these disadvantages are eliminated by providing the inner pressure resisting pipe with a circumferential fold at regular intervals, which is dimensioned to compensate the increase of lenght that occurs between two subsequent circumferential folds. Such pipes may be prefabricated and laid with only a simple containment, e.g. by back-fill of the earth from an excavation.

## Description

The invention relates to a continuous metal pipe covered in insulating and force transmitting foam for the distribution of fluids under varying temperature and pressure conditions. Foam insulated pipes of this type comprise at least the components an inner pressure resisting pipe, an insulating foam layer, and a plastic casing extruded around it, the foam layer transmitting forces between the components.

Pipes of this kind are known for industrial plants and in district heating, in particular for the transmission of hot fluids (e.g. pressurised water or steam) or cold media (e.g. liquified gas). The varying temperature conditions between storage temperature and operating temperature as well as the influence of the weather cause the lenght of the pipe not to be well defined, and axial compensators or fixations must nearly always be fitted in norder to prevent or absorb (skadelig) detrimental differences in length or axial forces. In other cases the installation of e.g. district heating pipes requires pre-heating to a suitable mean temperature before covering. Still, in particular in cases of directional changes and branching, stress relief procedures are indicated, special gravel types and/or other materials having defined elastic and flow properties. This is not the least due to the differences in length of the pressure pipe being transmitted through the stiff foam to the plastic casing. This means i.a. that gravel friction and fixing obtained by adhering to specific rules for installation are required for the maintenance of a well functioning pipe system under varying temperature and pressure conditions. This also means that the fluid pipes have to be designed for simultaneously acting large axial forces and internal water pressures.

Furthermore there is a long existing wish in the field to be able to install district heating pipes without the costly removal and possibly depositing of excavated materials, with the subsequent supply of the necessary sand amounts.

From DE 36 02 603 a construction is known in which the compensators - being concentrated at one end of the pipe - are multisection and manufactured in one piece with the inner pipe, which in turn is welded to the outer surrounding steel cased pipe. However, the pipe is described as needing either a pre-heating or mechanical prestressing of the inner pipe, and the welding of the inner and outer pipes is required in order to prevent the transmission of axial forces to the joining element or the subsequent length of pipe. The concentration of the compensators may further be expected to create problems for the surrounding insulation and the surrounding casing because of the movements.

It has been attempted to obtain a temperature compensation of raw metal pipes by means of pipe screw fittings, which on one hand were to transmit the large joining forces necessary for complete tightness and on the other hand permit axial compensation. Such a construction is described in US 327,215. In that the wall thickness for such fittings has to be appreciable, each fitting can only absorb small axial variations, and hence large pipe lengths can only be obtained by joining many short pieces of pipe. For this reason the above mentioned multisection compensators placed between larger lengths of pipe have been preferred.

According to the invention a solution to the above problem has been found, which is particular in that the metal pipe is provided at regular intervals with at least one outwards directed circumferential fold for essentially complete compensation of the thermal axial length deviation of the pipe section beetween two folds. Circular folds have to be provided so closely that the lengths of pipe therebetween do not develop tensile stresses that will be transmitted through the insulating foam into length variations of the outer casing.

There are many advantages of a pipe according to the invention. The elimination of axial forces enables that the wall thickness may now be dimensioned according to the pressure (with a suitable safety factor) of the transported fluid, instead according to the need to perform as an axially loaded column.

According to an embodiment of the invention the metal pipe is provided with two circular folds at each compensating location. This enables the loading of the pipe with a larger temperature interval.

According to an advantageous embodiment of the invention the outwards folds are placed closer in parts that will be installed with a bend. Hereby it is obtained that for certain dimension a bend may be obtained without inserting a section of pre-curved pipe, because the compensating folds may furthermore compensate for the axial angular deviation.

According to an embodiment of the invention the circular folds are facing inwards. In particular cases this enables a reduction of the insulation thickness.

As the pipe as a whole is tensionally neutral and dimensionally stable, it may be disposed in a simple trench with subsequent backfill of the excavated material.

Preparation of the relevant number of folds of the inner pressure pipe may occur by cold as well as hot pressing. In order to obtain the highest precision during manufacture and the least stress on the pipe and the manufacturing equipment, the prepartion of the folds will typically occur by axial pressing after heating, such as induction heating; alternatively the folds may be prepared by rolling. Subsequently the pipe is provided with insulation and an outer casing; according to conditions with a diffusion barrier as well.

The invention will be described in greater detail in the following with reference to the drawing, in which
Fig. 1a shows the principle of a pipe according to the invention in longitudinal section,
Fig. 1b shows a detail,
Fig. 2 shows a pair of traditionally manufactured pipes, in cross section in a trench,
Fig. 3 shows a pair of pipes in a trench, manufactured according to the invention, in cross section,
Fig. 4 shows in dimetric projection a functional sketch of a traditional district heating pipe with a bend disposed in a trench according to prior art, and
Fig 5 shows a similar functional sketch to the same scale of the laying of a district heating pipe according to the invention.

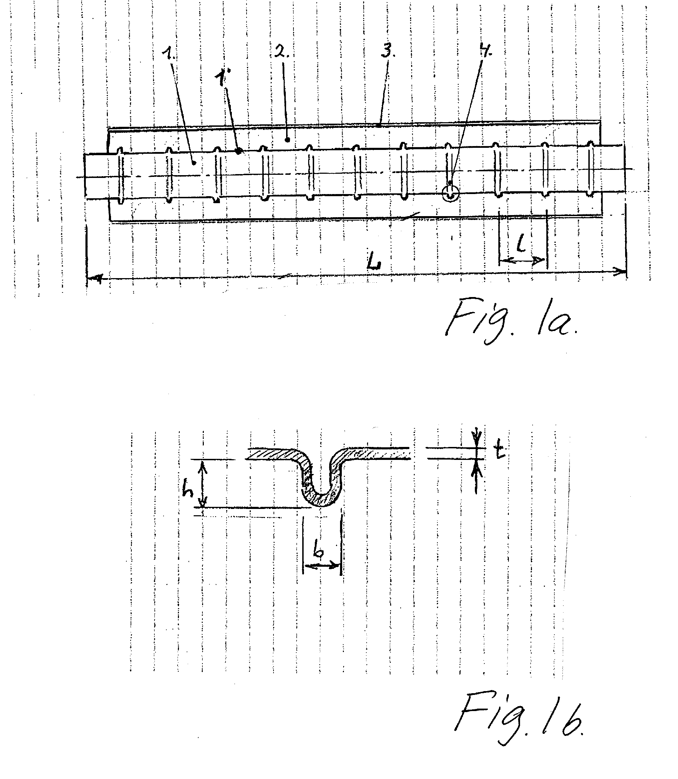

In Fig. 1a is seen an inner pipe 1 provided with an insulating layer 2 and a casing 3. At suitable distances the inner pipe is provided with an outwards directed and circumferential fold 4. During heating of the pipe the straight pipe parts 1' will lengthen, but this only causes the two edges at the transfer between the pipe parts 1' and the fold 4 to bend somewhat, while the hollow of the fold is similarly bent somewhat. During cooling of the pipe the straight pipe parts 1' will shorten, but this similarly only causes that the transfer between the pipe parts 1' and the fold are straightened slightly, just as the hollow of the fold will open slightly. There are hence three possibilities for bending/opening for each fold. The dimensions of the folds and their relative placment are determined partly by the limits for elastic deformation at the bends, partly by the need to keep the casing from stretching in consequence of transmission of the length variations from the inner pipe.

The construction has wide possibilities for variation, which may be utilised by the skilled person. Hence the length L of a pipe according to the invention may advantageously be selected in the interval 6 m to 16 m (up to 50 m in dependence of the manufacturing plant), the distance 1 between the folds may be between 200 and 1000 mm for a wall thickness t between 2 and 6 mm, when the following conditions are approximately met: the height of a fold shall be in the interval 4 times the wall thickness t to 8 times the wall thickness t, and the width of the fold shall be in the interval 3 times the wall thickness t to 5 times the wall thickness t.

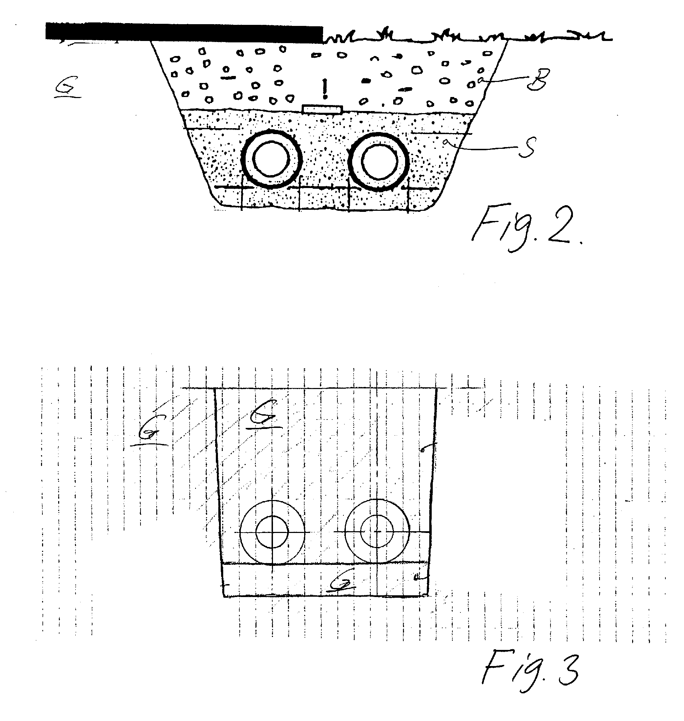

In Fig. 2 is seen a cross section through a pair of pipes which have been disposed in a trench according to prior art, which is particular in that there are provided at least three kinds of support materials: the material G that the excavation has been performed in, the sand S with particular properties that surrounds the pipes, and the backfill material B that has been put on top to stabilise. The sand S is a very expensive component that has to be provided separately and held separate from excavated earth, and it has to be subjected to a special compaction process.

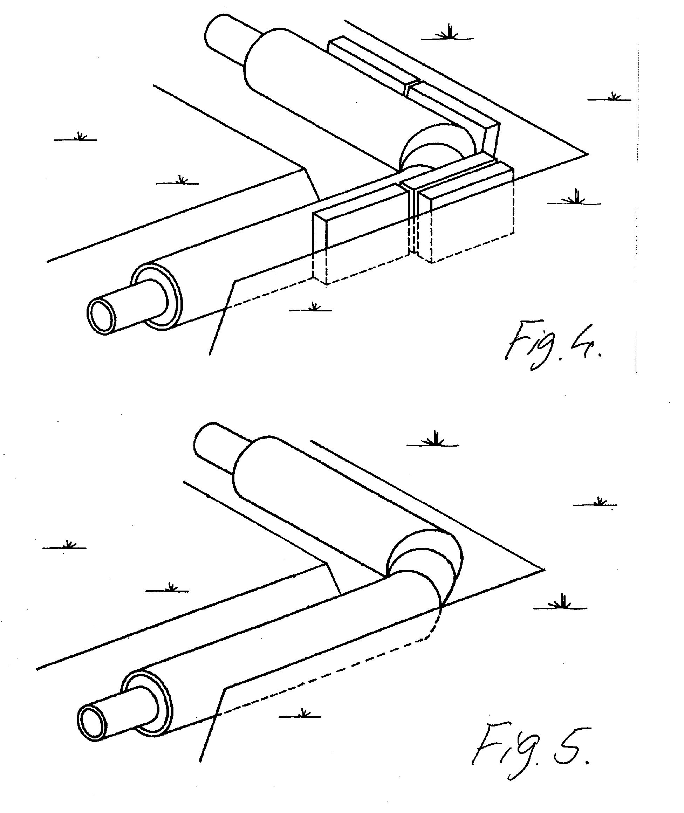

In Fig. 3 is seen a corresponding cross section through a pair of pipes disposed in a trench according to the invention. In this case the various material types have been replaced by just the earth material G, which has been excavated and back-filled and subsequently compacted. Furthermore the trench is narrower, because there is no need to distribute pressure and friction forces.

In Fig. 4 is seen a known solution of the stabilisation of a bend in an insulated pipe set in an excavated trench. An excavation of large width has been used, and with "cushions" for transmitting the forces to the ground. It is correspondingly shown in Fig. 5 that by using a pipe according to the invention the use of "cushions" may be dispensed with entirely, and the excavation also becomes narrower. Irrespective of the lenght of pipe the axial force developed at bends will never be greater than the remaining force between two folds subjected to the resilience of the folds.

## Claims

1. A continuous metal pipe covered in insulating and force transmitting foam for the distribution of fluids under varying temperature and pressure conditions, **characterised in that** the metal pipe is provided at regular intervals with at least one outwards directed peripheral fold for essentially complete compensation of the thermal axial length deviation of the pipe section beetween two folds.

2. A metal pipe according to claim 1, **characterised in that** the fold or folds are directed outwards.

3. A metal pipe according to claim 1, **characterised in that** the metal pipe is provided with two outwards directed folds at each compensating location.

4. A metal pipe according to claim 1, **characterised in that** the outwards directed folds are closer in parts that will be installed with a bend.

5. A metal pipe according to claim 1, **characterised in that** the peripheral folds are inwards directed.

6. A metal pipe according to claim 2 or 5, **characterised in that** the height (h) and width (b) of the folds are dimensioned in such a way with respect to the wall thickness (t) of the pipe that the following conditions are fulfilled: 4t < h < 8t and 3t < b < 5t.

7. A method for the manufacture of a metal pipe according to claim 1, **characterised in that** a cylindrical pipe is heated in a ring-shaped zone, followed by axial pressing, and that the same operation is performed in a predetermined number of axial positions on the pipe, whereupon the pipe is provided with foam insulation and an external casing.

8. A use of a metal pipe according to claim 7, **characterised in that** a trench is excavated along a predetermined lay-out in the ground, that the pipe is laid on the bottom, that the excavated material is distributed and compacted around the laid metal pipe, with prior connection to desired installations.
